# EUROPEAN PATENT APPLICATION

(11) **EP 4 641 507 A1**
(43) Date of publication of application: **29.10.2025**
(21) Application number: 23905816.7
(22) Date of filing: 15.12.2023
(51) Int. Cl.: G06T 11/40, G06F 3/04845, G06T 11/20

(54) **SPECIAL EFFECT PROCESSING METHOD AND APPARATUS, AND ELECTRONIC DEVICE AND STORAGE MEDIUM**

(30) Priority: 23.12.2022 CN 202211667509
(71) Applicant: Beijing Zitiao Network Technology Co., Ltd., Beijing 100190 (CN)
(72) Inventor: LI, Qianyi, Beijing 100028 (CN); LU, Zhixiong, Beijing 100028 (CN); FANG, Shancheng, Beijing 100028 (CN); LIU, Wei, Beijing 100028 (CN)
(74) Representative: Marks & Clerk LLP
(86) International application number: PCT/CN2023/138994
(87) International publication number: WO 2024/131652

(57) **Abstract**

Provided in the embodiments of the present disclosure are a special effect processing method and apparatus, and an electronic device and a storage medium. The special-effect processing method comprises : in response to a special effect trigger operation, presenting a special effect drawing canvas; receiving a drawing operation of a trigger object, which drawing operation acts on the special effect drawing canvas, presenting a drawing silhouette picture corresponding to the drawing operation, and filling the drawing silhouette picture with first content for presentation; and when a preset presentation condition is met, filling the drawing silhouette picture with second content to obtain a special effect picture, and presenting the special effect picture. By means of the embodiments of the present disclosure, personalized customization and an interesting experience of a special effect texture map can be realized, so as to enrich filling content of an image, thereby improving the usage experience of a user.

## Description

This application claims the priority of the Chinese Patent Application No. 202211667509.2 filed on December 23, 2022, and the content disclosed in the above Chinese Patent Application is hereby incorporated by reference in its entirety as part of this application.

### TECHNICAL FIELD

Embodiments of the present disclosure relate to an effect processing method and apparatus, an electronic device and a storage medium.

### BACKGROUND

With continuous development of the computer technology, many applications provide effects of the image application in order to enrich the display effect of images.

The effects are applied by adding a template image to the set effects so as to display the effect of these effects on the image. This effect display method delivers relatively simple display effects, and the effect display effects are much the same, lack interest and cannot well meet users' personalized needs, thus affecting the users' use experience.

### SUMMARY

The present disclosure provides an effect processing method and apparatus, an electronic device and a storage medium, to achieve personalized display of effect texture images, enriching the filling of image content.

In a first aspect, an embodiment of the present disclosure provides an effect processing method, including:
displaying an effect drawing canvas in response to an effect trigger operation;
receiving a drawing operation of a trigger object acting on the effect drawing canvas, displaying a drawn outline image corresponding to the drawing operation, and filling first content in the drawn outline image for display; and
when a preset display condition is met, filling second content in the drawn outline image to obtain a rendering and displaying the rendering.

In a second aspect, an embodiment of the present disclosure provides an effect processing apparatus, including:
a canvas display module configured to display an effect drawing canvas in response to an effect trigger operation;
an outline display module configured to receive a drawing operation of a trigger object acting on the effect drawing canvas, display a drawn outline image corresponding to the drawing operation, and fill first content in the drawn outline image for display; and
an effect display module configured to fill second content in the drawn outline image when a preset display condition is met to obtain a rendering and display the rendering.

In a third aspect, an embodiment of the present disclosure provides an electronic device, including:
one or more processors; and
a storage apparatus, being configured to store one or more programs,
where when the one or more programs are executed by the one or more processors, the one or more processors implement the effect processing described above.

In a third aspect, an embodiment of the present disclosure provides a storage medium including a computer executable instruction, where the computer executable instruction is used to implement the effect processing method described above when being executed by a computer processor.

### BRIEF DESCRIPTION OF DRAWINGS

The above and other features, advantages and aspects of various embodiments of the present disclosure will become more apparent when taken in conjunction with the drawings and with reference to the following detailed description. Throughout the drawings, the same or similar reference numbers refer to the same or similar elements. It should be understood that the drawings are schematic and that the components and elements are not necessarily drawn to scale.
Fig. 1 is a schematic flow chart of an effect processing method provided by an embodiment of the present disclosure;
Fig. 2 is an interface display diagram of a drawn outline image of an effect processing method provided by an embodiment of the present disclosure;
Fig. 3 is a schematic flow chart of an effect processing method provided by an embodiment of the present disclosure;
Fig. 4 is a schematic flow chart of an effect processing method provided by an embodiment of the present disclosure;
Fig. 5 is a schematic flow chart of an effect processing method provided by an embodiment of the present disclosure;
Fig. 6 is a structure diagram of an effect processing apparatus provided by an embodiment of the present disclosure; and
Fig. 7 is a structure diagram of an electronic device provided by an embodiment of the present disclosure.

### DETAILED DESCRIPTION

Embodiments of the present disclosure will be described in more detail below with reference to the drawings. Although some embodiments of the present disclosure are shown in the drawings, it should be understood that the present disclosure can be implemented in various forms and should not be construed as being limited to the embodiments set forth herein. Rather, these embodiments are provided for a thorough and complete understanding of the present disclosure. It should be understood that the drawings and embodiments of the present disclosure are only for exemplary purposes, and are not intended to limit the scope of the present disclosure.

It should be understood that various steps described in method implementations of the present disclosure can be performed in different orders, and/or performed in parallel. In addition, the method implementations can include additional steps and/or omit performing the illustrated steps. The scope of the present disclosure is not limited in this respect.

The term "include/comprise" used herein and the variations thereof are open-ended inclusions, namely, "include/comprise but not limited to". The term "based on" is "at least partially based on". The term "one embodiment" means "at least one embodiment"; the term "another embodiment" means "at least one other embodiment"; and the term "some embodiments" means "at least some embodiments". Relevant definitions of other terms will be given in the description below.

It should be noted that concepts such as "first" and "second" mentioned in the present disclosure are only used to distinguish different apparatuses, modules, or units, and are not used to limit the order of functions performed by these apparatuses, modules, or units or interdependence between these apparatuses, modules, or units.

It should be noted that the modifications of "one" and "a plurality" mentioned in the present disclosure are illustrative rather than restrictive, and those skilled in the art should understand that unless the context clearly indicates otherwise, the modifications should be understood as "one or more".

The names of messages or information exchanged between multiple apparatuses in implementations of the present disclosure are used for illustrative purposes only but are not used to limit the scope of these messages or information.

It should be understood that, before the technical solution disclosed in embodiments of the present disclosure is used, the user shall be informed of the type, scope of use, use scenario and the like of the personal information involved in the present disclosure in an appropriate manner in accordance with the relevant laws and regulations and the user's authorization shall be obtained.

For example, in response to an unsolicited request received from a user, a prompt message is sent to the user to clearly inform the user that his/her requested operation will need to acquire and use the user's personal information. Thus, the user can independently choose, according to the prompt message, whether to provide the personal information to software or hardware such as an electronic device, an application, a server or a storage medium that performs the operation in the technical solution of the present disclosure.

As an optional but non-limited implementation, in response to the unsolicited request received from the user, the prompt message may be sent to the user in the mode of, for example, a popup window, in which the prompt message may be presented in the form of text. In addition, a selection control for the user to choose "agree" or "disagree" to provide the personal information to the electronic device may also be hosted in the popup window.

It should be understood that, the above process of notification and acquisition of the user's authorization is only illustrative but is not intended to limit the implementation of the present disclosure, and other methods which meet the relevant laws and regulations can also be applied to the implementation of the present disclosure.

It can be understood that, the data involved in this technical solution (including but not limited to the data itself, acquisition or use of the data) shall comply with the requirements of the relevant laws and regulations and relevant provisions.

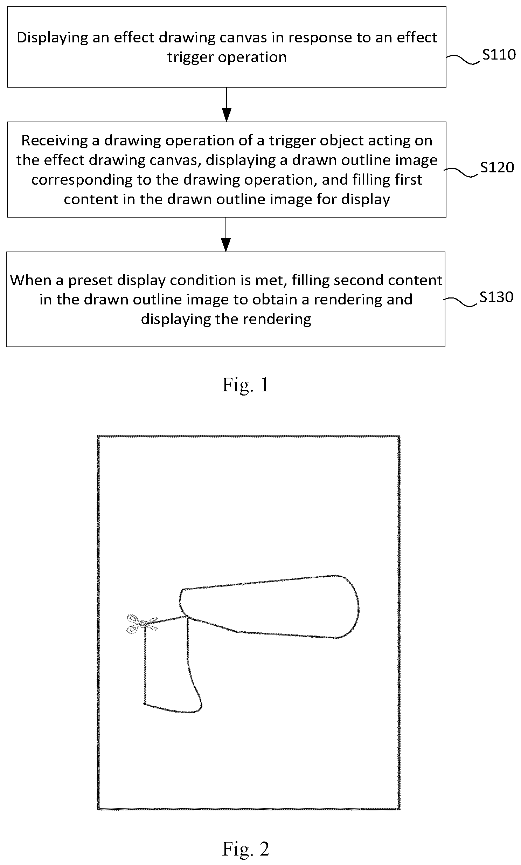

Fig. 1 is a schematic flow chart of an effect processing method provided by an embodiment of the present disclosure. The embodiment of the present disclosure is suitable for display of an effect texture image. This method may be executed by an effect processing apparatus, which may be implemented in the form of software and/or hardware, or optionally by an electronic device. The electronic device may be a mobile terminal, a PC, a server or the like.

As shown in Fig. 1, the method in this embodiment may specifically include the following steps:
S110. Displaying an effect drawing canvas in response to an effect trigger operation.

The effect trigger operation may be understood as a trigger operation for effect drawing on the effect drawing canvas. In the embodiment of the present disclosure, there are many ways to perform the effect trigger operation. For example, a control which is preset to trigger effects is triggered; an effect add instruction contained in voice information is detected; or a trigger object contained in a captured image is detected. The trigger object may be understood as an object capable of triggering effects. Optionally, the trigger object may include at least one selected from the group of the nasal tip, a toe, an elbow, a single finger or two scissor-shaped fingers. The effect drawing canvas may be understood as a canvas for drawing effects. In the embodiment of the present disclosure, the shape of the effect drawing canvas may be set according to the actual needs, for example, a rectangle, a square, a circle or the like.

In an embodiment, in application software or an application that supports the effect processing function, an effect trigger control for triggering effects may be pre-developed. After a control trigger operation on the effect trigger control is received, the effect drawing canvas may be displayed based on the control trigger operation.

In another embodiment, the voice information input by the user is received. After the voice information is received, it may be analyzed and processed. After it is determined that the voice information contains an effect add instruction, the effect drawing canvas may be obtained based on the effect add instruction. Then, the obtained effect drawing canvas may be displayed.

In a further embodiment, a captured image is obtained. After the captured image is obtained, the captured image may be detected. After it is detected that the captured image contains a trigger object, e.g., the nasal tip, a toe, an elbow, a single finger or two scissor-shaped fingers, the effect drawing canvas may be obtained. After the effect drawing canvas is obtained, the effect drawing canvas may be displayed. For example, a cutting mark may be displayed in the effect drawing canvas during movement of the two scissor-shaped fingers, where the cutting mark moves with the movement of the fingers. This has the advantage of simulating the cutting effect and increasing the interest of user interaction and the vividness of image display. In the embodiment of the present disclosure, there are many ways to display the effect drawing canvas.

As an optional implementation of the embodiment of the present disclosure, displaying the effect drawing canvas may include: generating the effect drawing canvas after an effect trigger operation is received. Then, the effect drawing canvas can be displayed. Optionally, generating the effect drawing canvas may include: determining a resolution of a screen resolution at which the effect canvas is displayed. Then, the canvas size corresponding to the screen resolution may be determined according to the pre-configured correspondence between screen resolutions and canvas sizes. Then, a canvas of the canvas size may be created as the effect canvas.

As another optional implementation of the embodiment of the present disclosure, displaying the effect drawing canvas may include: determining a preset effect drawing canvas after an effect trigger operation is received, and displaying the preset effect drawing canvas. Optionally, determining the preset effect drawing canvas may include: acquiring the effect canvas from a storage space used to store effect canvas.

S120. Receiving a drawing operation of a trigger object acting on the effect drawing canvas, displaying a drawn outline image corresponding to the drawing operation, and filling first content in the drawn outline image for display.

The drawing operation may be understood as an operation of effect drawing in the effect canvas by the trigger object. The drawn outline image may be an outline image generated based on the drawing operation of the trigger object. In practical applications, multiple drawn lines may be obtained based on the drawing operation. After the multiple drawn lines are obtained, an outline line may be determined from the drawn lines according to line positions of the drawn lines. Then, the drawn outline image may be generated based on the outline line. It should be noted that, the drawn line may be at least one selected from the group of straight line, curve and broken line, and are not specifically defined herein. The first content may be understood as preset content to be filled in the drawn outline image. Optionally, the first content may be a color and/or a pattern. It should be noted that, when the first content filled in the drawn outline image is a color, the color filled may be a preset color to be filled in the drawn outline image, for example, red, yellow, blue or the like. In the embodiment of the present disclosure, the pattern may be set according to the actual needs, and the specific pattern is not limited herein. For example, the pattern may be a geometric pattern. The geometric pattern may be composed of straight lines, curves, broken lines, crosses, deformations, loops and the like.

In an embodiment, receiving the drawing operation of a trigger object acting on the effect drawing canvas and displaying the drawn outline image corresponding to the drawing operation may include: receiving a movement trajectory of the trigger object acting on a screen on which the effect drawing canvas is displayed. Then, a movement outline may be obtained based on the movement trajectory. Thus, the drawn outline image may be generated according to the movement outline. After the drawn outline image is obtained, the drawn outline image may be displayed. For example, if the trigger object is a single finger, then the movement trajectory of the single finger acting on the screen on which the effect drawing canvas is displayed is received. The movement trajectory may be a quadrilateral, then the quadrilateral may be used as the drawn outline image.

As an optional implementation of the embodiment of the present disclosure, when the trigger object includes one contact point, the movement trajectory of the contact point acting on the screen on which the effect drawing canvas is displayed is received. Then, the movement trajectory may be analyzed. Thus, a movement outline may be obtained based on the movement trajectory. Thus, the drawn outline image can be generated according to the movement outline.

As another optional implementation of the embodiment of the present disclosure, when the trigger object includes two contact points, a target point may be determined based on at least two contact points. The target point may be understood as a point used for effect drawing when there are two contact points. In the embodiment of the present disclosure, the target point may be any position point on a connecting line between the two contact points, for example, the midpoint on the connecting line between the two contact points. After the target point is determined, the movement trajectory of the target point acting on the screen on which the effect drawing canvas is displayed may be received. Then, a movement outline may be obtained based on the movement trajectory. Thus, the drawn outline image can be generated according to the movement outline.

In another embodiment, receiving the drawing operation of the trigger object acting on the effect drawing canvas and displaying the drawn outline image corresponding to the drawing operation may include: when the trigger object includes one trigger point, acquiring a movement of the trigger point, i.e., capturing the movement of the trigger point. Then, the drawn outline image may be generated based on the movement of the trigger point. Thus, the generated drawn outline image can be displayed. For example, if the trigger object is the nasal tip, then after the movement of the nasal tip is captured, a movement area in the effect drawing canvas corresponding to the movement of the nasal tip may be determined, and the movement area is used as the drawn outline image. If the trigger object is two scissor-shaped fingers, then the trigger point of the two scissor-shaped fingers may be any point on the connecting line between the two fingers. By capturing the movement of any point on the connecting line between the two fingers, the drawn outline image can be generated based on the movement of the point.

In the embodiment of the present disclosure, the drawn outline image drawn on the effect drawing canvas may be rendered after the drawn outline image corresponding to the drawing operation is generated. Thus, the drawn outline image is displayed. After the drawn outline image is displayed, the first content may be filled in the drawn outline image. After the content is filled, the drawn outline image which has been filled with the first content may be rendered. Thus, the drawn outline image can be displayed with the filling pattern of the first content.

S130. When a preset display condition is met, filling second content in the drawn outline image to obtain a rendering and displaying the rendering.

The rendering may be an image obtained by filling the second content in the drawn outline image which has been filled with the first content. The second content may be understood as the content filled in the drawn outline image which has been filled with the first content. In the embodiment of the present disclosure, the type of the first content may be the same as or different from the type of the second content. In other words, if the first content is a color, the second content may be a color or a pattern; or when the first content is a pattern, the second content may be a color or a pattern.

Specifically, when a preset display condition is met, the second content may be filled into the drawn outline image which has been filled with the first content. After filling, the drawn outline image filled with the first content and the second content can be obtained. Thus, the drawn outline image filled with the first content and the second content may be used as the rendering. After the rendering is obtained, the rendering may be displayed.

Optionally, filling second content in the drawn outline image to obtain the rendering may include: filling a first object of the preset type and/or a second object associated with the first object in the drawn outline image to obtain the rendering.

The first object may be understood as an object that needs to be filled in the drawn outline image. The type of the first object may be preset and may be used to represent the type of the pattern of the object filled in the drawn outline image. Optionally, the type of the first object may be any selected from the group of an animal, a plant and a person. The second object may be understood as an object which can be filled in the drawn outline image and has an association relationship with the first object. The type of the first object may be the same as or different from the type of the second object. For example, the first object filled in the drawn outline image is a rabbit, and the second object filled in the drawn outline image is a carrot. Alternatively, the first object filled in the drawn outline image is grass, and the second object filled in the drawn outline image is a flower.

In an embodiment, filling the second content in the drawn outline image to obtain the rendering may include: filling a first object of the preset type or a second object associated with the first object in the drawn outline image, where the drawn outline image filled with the first object or the drawn outline image filled with the second object is obtained after filling. Thus, the drawn outline image filled with the first object or the drawn outline image filled with the second object may be used as the rendering.

In another embodiment, filling the second content in the drawn outline image to obtain the rendering may include: filling a first object of the preset type and a second object associated with the first object in the drawn outline image, where the drawn outline image filled with the first object and the second object is obtained after filling. Thus, the drawn outline image filled with the first object and the second object may be used as the rendering.

In the embodiment of the present disclosure, when generation of the rendering corresponding to the drawn outline image is detected, the rendering corresponding to the drawn outline image may be displayed; or after the rendering corresponding to the drawn outline image is generated and when it is time to display the rendering, the rendering corresponding to the drawn outline image may be displayed, where the display time of the rendering is later than the generation time of the rendering; or, after it is detected that relative display of the preset interactive object (the "scissors" as shown in Fig. 2) and the drawn outline image is completed, the rendering corresponding to the drawn outline image may be displayed. The relative display may be implemented through movement around the edge of the drawn outline image in the preset posture.

In an embodiment, when the rendering corresponding to the drawn outline image is generated at a terminal, i.e., after the second content is filled into the drawn outline image at the terminal, the storage space in the terminal for storing the rendering may be determined if a preset display condition is met. Then, the rendering can be read from the storage space and displayed.

In another embodiment, when the rendering corresponding to the drawn outline image is generated at a server, i.e., after the second content is filled into the drawn outline image at the server, the rendering corresponding to the drawn outline image may be acquired from the server if a preset display condition is met. Then, the rendering can be displayed. This has the advantage of reducing the occupancy of computing resources on the local end.

In the technical solution of the embodiment of the present disclosure, an effect drawing canvas is displayed in response to an effect trigger operation. A drawing operation of a trigger object acting on the effect drawing canvas is received, a drawn outline image is drawn through man-machine interaction, then the drawn outline image corresponding to the drawing operation is displayed, and the drawn outline image is filled with first content for display. When a preset display condition is met, second content is filled in the drawn outline image to obtain a rendering and the rendering is displayed. The drawing operation is associated with the effect, which enriches the display effect of the image. The technical solution of the embodiment of the present disclosure enriches the content of image filling, presents different filling effects, realizes personalized customization and interesting experience of the effect texture image, and improves the effect of user experience.

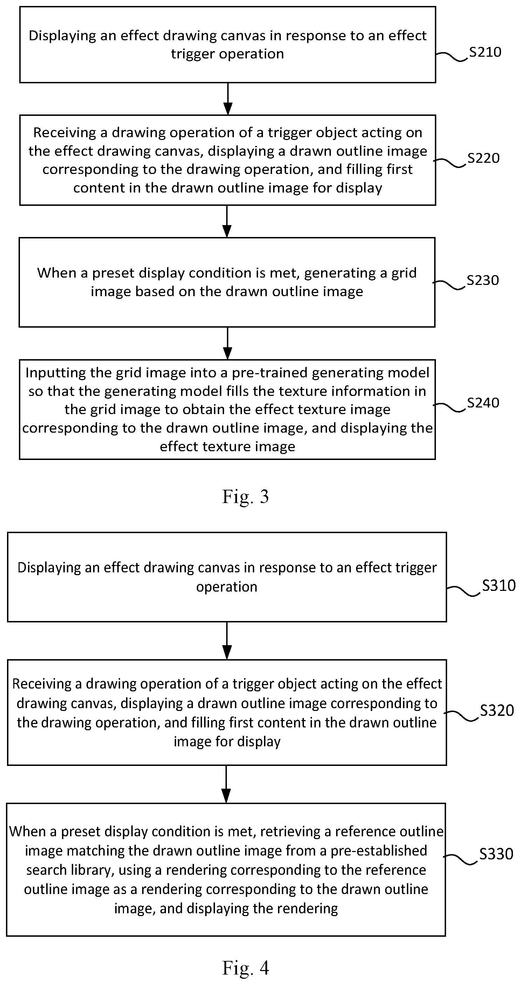

Fig. 3 is a schematic flow chart of an effect processing method provided by an embodiment of the present disclosure. On the basis of the above embodiment, how to obtain and display the rendering is further refined in the technical solution of this embodiment. Optionally, the second content includes texture information, and the rendering includes an effect texture image. Filling the second content in the drawn outline image to obtain the rendering and displaying the rendering includes: generating a grid image based on the drawn outline image; and inputting the grid image into a pre-trained generating model so that the generating model fills the texture information in the grid image to obtain the effect texture image corresponding to the drawn outline image, and displaying the effect texture image, where the generating model is obtained by training a pre-established diffusion model based on a sample texture image and a sample text corresponding to the sample texture image. For the specific implementation, see the description of this embodiment. The technical features which are the same as or similar to the above embodiment will not be further described herein.

As shown in Fig. 3, the method of this embodiment may specifically include the following steps:
S210. Displaying an effect drawing canvas in response to an effect trigger operation.
S220. Receiving a drawing operation of a trigger object acting on the effect drawing canvas, displaying a drawn outline image corresponding to the drawing operation, and filling first content in the drawn outline image for display.
S230. When a preset display condition is met, generating a grid image based on the drawn outline image.

In an embodiment, the generating the grid image based on the drawn outline image may include: down-sampling the drawn outline image to obtain a scaling image of the preset size; processing pixel points in the scaling image by setting a second preset number of pixel points to a preset color for each interval of a first preset number of pixel points; and enlarging the processed scaling image to the original size of the drawn outline image to obtain the grid image.

The preset size may be the scaled size set for the drawn outline image according to the experience, for example, 128px* 128px. In the embodiment of the present disclosure, the down-sampling the drawn outline image to obtain the scaling image of the preset size may include: down-sampling the drawn outline image based on the preset down-sampling algorithm. Thus, the scaling image of the preset size can be obtained. The preset down-sampling algorithm may be set according to the actual needs, for example, the nearest neighbor sampling method, the quadratic interpolation method, the bicubic convolution method or the like. Optionally, the preset size may be included in the preset sampling algorithm.

In the embodiment of the present disclosure, the first preset number and the second preset number may be the same or different, and may be set according to the grid size. The preset color may be set according to the actual needs, for example, white, yellow or the like. In the embodiment of the present disclosure, the first color may be different from the preset color. In other words, the preset color may be any color other than the first color. For example, the first color may be red and the preset color is white; or the first color is blue and the preset color is yellow. The original size of the drawn outline image may be understood as the size of the drawn outline image before the drawn outline image is down-sampled.

Specifically, after the drawn outline image is obtained, the drawn outline image may be down-sampled. Thus, the scaling image of the preset size may be obtained. After the scaling image of the drawn outline image is obtained, the pixel points in the scaling image may be processed by setting the second preset number of pixel points to the preset color for each interval of the first preset number of pixel points. Thus, the processed scaling image is obtained. After the processed scaling image is obtained, the processed scaling image may be enlarged to the original size of the drawn outline image. Thereby, the grid image is obtained.

For example, the pixel points in the scaling image include in turn a first pixel point, a second pixel point, a third pixel point, a fourth pixel point, a fifth pixel point and a sixth pixel point, which have the color of red. The pixel points in the scaling image may be processed by setting the second preset number of pixel points to the preset color for each interval of the first preset number of pixel points. If the first preset number is 1, the second preset number is 1 and the preset color is white, then the first pixel point, the third pixel point and the fifth pixel point are red, and the second pixel point, the fourth pixel point and the sixth pixel point are white. If the first preset number is 2, the second preset number is 1 and the preset color is white, then the first pixel point, the second pixel point, the fourth pixel point and the fifth pixel point are red, and the third pixel point and the sixth pixel point are white.

In another embodiment, the generating the grid image based on the drawn outline image may include: enlarging the drawn outline image to a second size when the size of the drawn outline image is smaller than a first size, and generating the grid image based on the drawn outline image of the second size.

The first size may be a preset size, which may be used to determine whether the drawn outline image needs to be enlarged. The second size may be understood as the size of the image after the drawn outline image is enlarged when the size of the drawn outline image is smaller than the first size. In the embodiment of the present disclosure, the first size is smaller than the second size.

Specifically, the actual size of the drawn outline image is determined. When the actual size of the drawn outline image is smaller than the first size, the drawn outline image may be enlarged based on the second size. Thus, the drawn outline image of the second size is obtained. After the drawn outline image of the second size is obtained, the grid image may be generated based on the drawn outline image of the second size.

On the basis of the above embodiment, after obtaining the effect texture image corresponding to the drawn outline image and before displaying the effect texture image, the method further includes: adjusting the effect texture image to the same size as the drawn outline image.

Specifically, after the effect texture image corresponding to the drawn outline image is obtained, the size of the effect texture image and the size of the drawn outline image may be determined. When the size of the effect texture image is smaller than the size of the drawn outline image, the effect texture image may be enlarged to the size of the drawn outline image. When the size of the effect texture image is larger than the size of the drawn outline image, the effect texture image may be narrowed to the size of the drawn outline image.

S240. Inputting the grid image into a pre-trained generating model so that the generating model fills the texture information in the grid image to obtain the effect texture image corresponding to the drawn outline image, and displaying the effect texture image.

The texture information may be understood as information for describing the pattern. The effect texture image may be understood as a rendering obtained by filling the texture information in the grid image corresponding to the drawn outline image. The generating model may be understood as a model for generating the effect texture image. The generating model may be obtained by training a pre-established diffusion model based on a sample texture image and a sample text corresponding to the sample texture image. In the embodiment of the present disclosure, the diffusion model may be decomposed into the UNet network, the VAE coding network, the VAE decoding network and the Clip text coding network for deployment, which is easy to both analyze the grid image and generate the effect texture image. Model optimization parameters of the diffusion model may at least include a parameter for controlling the effect of the generated effect texture image, a parameter for controlling the correlation of the effect texture image with the input grid image and the level of refinement of the generated effect texture image, and a parameter for controlling the number of rounds of the generated effect texture image. For example, the parameter for controlling the effect of the generated effect texture image may be a parameter that represents information such as the character, the background, the style, the resolution and the theme of the effect texture image.

Specifically, the grid image is input into the pre-trained generating model. After the input grid image is analyzed by the generating model, the effect texture image corresponding to the drawn outline image may be obtained. Then, the effect texture image can be displayed.

In the embodiment of the present disclosure, training a pre-established diffusion model to obtain the generating model may include: pre-establishing a diffusion model. Sample data and desired data corresponding to the sample data are acquired. The sample data may be the sample texture image and the sample text corresponding to the sample texture image, and the desired data may be the desired texture image. After the sample data and the desired data are acquired, the sample texture image and the sample text corresponding to the sample texture image may be input into the pre-established diffusion model to train the diffusion model. When the loss function of the diffusion model converges, the trained diffusion model is obtained, i.e., the generating model is obtained. In the embodiment of the present disclosure, the diffusion model may be processed based on the SDEdit method so that the diffusion model can generate the effect texture image based on the grid image.

In order to ensure the accuracy of the generating model, the embodiment of the present disclosure further includes testing the trained diffusion model. Specifically, the test grid image is input into the trained diffusion model. Thus, the actual output result corresponding to the test grid image is obtained, i.e., the actual texture image corresponding to the test grid image is obtained. Then, the accuracy of the trained diffusion model may be determined according to the test texture image and the actual texture image corresponding to the test grid image. When the accuracy is below the preset accuracy threshold, the model optimization parameters of the diffusion model may be optimized. Then, the optimized parameters may be obtained to re-train the diffusion model until the accuracy of the output result of the trained diffusion model is higher than the preset accuracy threshold. The preset accuracy threshold may be set according to the actual situation.

In the technical solution of the embodiment of the present disclosure, by generating a grid image based on the drawn outline image, inputting the grid image into a pre-trained generating model so that the generating model fills the texture information in the grid image to obtain the effect texture image corresponding to the drawn outline image, and displaying the effect texture image, it can be realized to fill the texture information in the grid image fast and efficiently to obtain the effect texture image corresponding to the drawn outline image.

Fig. 4 is a schematic flow chart of an effect processing method provided by an embodiment of the present disclosure. On the basis of the above embodiment, how to display the effect texture image corresponding to the drawn outline image is further refined in the technical solution of this embodiment. Optionally, displaying the effect texture image corresponding to the drawn outline image includes: retrieving a reference outline image matching the drawn outline image from a pre-established search library, using an effect texture image corresponding to the reference outline image as an effect texture image corresponding to the drawn outline image, and displaying the effect texture image. For the specific implementation, refer to the description of this embodiment. The technical features which are the same as or similar to the above embodiment will not be further described herein.

As shown in Fig. 4, the method of this embodiment may specifically include the following steps:
S310. Displaying an effect drawing canvas in response to an effect trigger operation.
S320. Receiving a drawing operation of a trigger object acting on the effect drawing canvas, displaying a drawn outline image corresponding to the drawing operation, and filling first content in the drawn outline image for display.
S330. When a preset display condition is met, retrieving a reference outline image matching the drawn outline image from a pre-established search library, using a rendering corresponding to the reference outline image as a rendering corresponding to the drawn outline image, and displaying the rendering.

The search library may be understood as a pre-established database for storing completed outline images. In practical application, there may be multiple outline images that are stored in the search library. The reference outline image may be understood as an outline image in the search library that matches the drawn outline image.

Specifically, when a preset display condition is met, the outline images stored in the pre-established search library may be traversed. Thus, an outline image matching the drawn outline image may be retrieved from the pre-established search library and used as the reference outline image. After the reference outline image is determined, the rendering corresponding to the reference outline image may be determined according to the correspondence between the reference outline images and the renderings. Thus, the rendering corresponding to the reference outline image may be used as the rendering corresponding to the drawn outline image. Thereby, the rendering may be displayed.

In the embodiment of the present disclosure, the reference outline image matching the drawn outline image is retrieved from the pre-established search library, and then the rendering corresponding to the reference outline image is used as the rendering corresponding to the drawn outline image. This has the advantage that the drawn outline image corresponding to the drawing operation can be obtained more quickly.

In the embodiment of the present disclosure, retrieving the reference outline image matching the drawn outline image from the pre-established search library may include: determining the outline feature corresponding to the drawn outline image, and retrieving the reference outline image matching the drawn outline image from the pre-established search library based on the outline feature.

Specifically, after the drawn outline image is obtained, feature extraction may be carried out on the drawn outline image. Thus, the outline feature corresponding to the drawn outline image is obtained. After the outline feature corresponding to the drawn outline image is obtained, similarity comparison may be made between the outline feature corresponding to the drawn outline image and the outline features of the outline images in the pre-established search library to obtain comparison result. Based on the comparison result, the reference outline image in the search library that matches the drawn outline image is determined.

Optionally, determining the reference outline image in the search library that matches the drawn outline image based on the comparison result may include: when the comparison result exceeds a preset similarity threshold, using the outline image in the search library corresponding to the outline feature for which the comparison result has been obtained as the reference outline image. The preset similarity threshold may be set according to the actual needs, and its specific value is not limited herein, e.g., 80%, 85% or 90%.

In the technical solution of the embodiment of the present disclosure, by retrieving the reference outline image matching the drawn outline image from the pre-established search library, using the rendering corresponding to the reference outline image as the rendering corresponding to the drawn outline image and displaying the rendering, the drawn outline image corresponding to the drawing operation can be obtained more quickly.

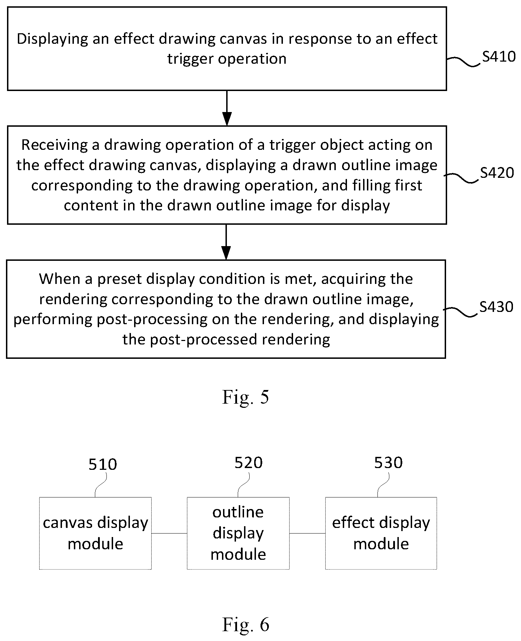

Fig. 5 is a schematic flow chart of an effect processing method provided by an embodiment of the present disclosure. On the basis of the above embodiment, how to display the rendering corresponding to the drawn outline image is further refined in the technical solution of this embodiment. Optionally, displaying the rendering corresponding to the drawn outline image includes: acquiring the rendering corresponding to the drawn outline image, performing post-processing on the rendering, and displaying the post-processed rendering. The post-processing includes at least one selected from the group of binarization processing, matting processing and background removal processing. For the specific implementation, refer to the description of this embodiment. The technical features which are the same as or similar to the above embodiment will not be further described herein.

As shown in Fig. 5, the method of this embodiment may specifically include the following steps:
S410. Displaying an effect drawing canvas in response to an effect trigger operation.
S420. Receiving a drawing operation of a trigger object acting on the effect drawing canvas, displaying a drawn outline image corresponding to the drawing operation, and filling first content in the drawn outline image for display.
S430. When a preset display condition is met, acquiring the rendering corresponding to the drawn outline image, performing post-processing on the rendering, and displaying the post-processed rendering.

In the embodiment of the present disclosure, the post-processing may include at least one selected from the group of binarization processing, matting processing and background removal processing. The purpose of performing the post-processing on the rendering is to reduce the image noise so as to improve the quality of the rendering.

In an embodiment, after the rendering is acquired, binarization processing may be performed on the rendering. Then, the rendering after the binarization processing may be obtained. After the rendering after the binarization processing is obtained, the rendering after the binarization processing may be displayed.

In another embodiment, after the rendering is acquired, matting processing may be performed on the rendering by invoking a preset matting tool. Thus, the rendering after the matting processing is obtained. After the rendering after the matting processing is obtained, the rendering after the matting processing may be displayed. It should be noted that, the preset matting tool may be a third-party matting tool or a customized matting tool.

In a further embodiment, after the rendering is acquired, the rendering may be analyzed so that the background of the rendering may be determined. After the background of the rendering is determined, background removal processing may be performed on the rendering. Then, the rendering with the background removed is obtained. After the rendering with the background removed is obtained, the rendering with the background removed may be displayed.

In the technical solution of the embodiment of the present disclosure, by acquiring the rendering corresponding to the drawn outline image, performing post-processing on the rendering, and displaying the post-processed rendering, the rendering can be processed in detail so as to further improve the display effect of the rendering.

Fig. 6 is a structure diagram of an effect processing apparatus provided by an embodiment of the present disclosure. As shown in Fig. 6, the apparatus includes: a canvas display module 510, an outline display module 520 and an effect display module 530.

The canvas display module 510 is configured to display an effect drawing canvas in response to an effect trigger operation. The outline display module 520 is configured to receive a drawing operation of a trigger object acting on the effect drawing canvas, display a drawn outline image corresponding to the drawing operation, and fill first content in the drawn outline image for display. The effect display module 530 is configured to fill second content in the drawn outline image when a preset display condition is met so as to obtain a rendering and display the rendering.

In the technical solution of the embodiment of the present disclosure, by means of the canvas display module, an effect drawing canvas is displayed in response to an effect trigger operation; by means of the outline display module, a drawing operation of a trigger object acting on the effect drawing canvas is received, a drawn outline image is drawn through man-machine interaction, then the drawn outline image corresponding to the drawing operation is displayed, and the drawn outline image is filled with first content for display; and by means of the effect display module, when a preset display condition is met, second content is filled in the drawn outline image to obtain a rendering and the rendering is displayed. The technical solution of the embodiment of the present disclosure realizes personalized customization and interesting experience of the effect texture image, and improves the effect of user experience.

On the basis of the above optional technical solutions, optionally, the second content includes texture information, the rendering includes an effect texture image, and the effect display module 530 includes a grid image generating unit and an effect texture image display unit.

The grid image generating unit is configured to generate a grid image based on the drawn outline image.

The effect texture image display unit is configured to input the grid image into a pre-trained generating model so that the generating model fills the texture information in the grid image to obtain the effect texture image corresponding to the drawn outline image, and display the effect texture image. The generating model is obtained by training a pre-established diffusion model based on a sample texture image and a sample text corresponding to the sample texture image.

On the basis of the above optional technical solutions, optionally, the grid image generating unit is configured to:
down-sample the drawn outline image to obtain a scaling image of a preset size;
process pixel points in the scaling image by setting a second preset number of pixel points to a preset color for each interval of a first preset number of pixel points; and
enlarge the processed scaling image to the original size of the drawn outline image to obtain the grid image.

On the basis of the above optional technical solutions, optionally, the grid image generating unit is configured to:
enlarge the drawn outline image to a second size when the size of the drawn outline image is smaller than a first size, and generate the grid image based on the drawn outline image of the second size.

The apparatus further includes an effect texture image adjusting module, which is configured to adjust the effect texture image to the same size as the drawn outline image after obtaining the effect texture image corresponding to the drawn outline image and before displaying the effect texture image.

On the basis of the above optional technical solutions, optionally, the diffusion model is decomposed into the UNet network, the VAE coding network, the VAE decoding network and the Clip text coding network for deployment.

On the basis of the above optional technical solutions, optionally, model optimization parameters of the diffusion model at least include a parameter for controlling the effect of the generated effect texture image, a parameter for controlling the correlation of the effect texture image with the input grid image and the level of refinement of the generated effect texture image, and a parameter for controlling the number of rounds of the generated effect texture image.

On the basis of the above optional technical solutions, optionally, the effect display module 530 is specifically configured to:
retrieve a reference outline image matching the drawn outline image from a pre-established search library, use a rendering corresponding to the reference outline image as a rendering corresponding to the drawn outline image, and display the rendering.

On the basis of the above optional technical solutions, optionally, the effect display module 530 is specifically configured to:
acquire the rendering corresponding to the drawn outline image, perform post-processing on the rendering, and display the post-processed rendering, where the post-processing includes at least one selected from the group of binarization processing, matting processing and background removal processing.

On the basis of the above optional technical solutions, optionally, the effect display module 530 is specifically configured to: fill a first object of the preset type and/or a second object associated with the first object in the drawn outline image to obtain the rendering.

On the basis of the above optional technical solutions, optionally, the trigger object includes at least one selected from the group of the nasal tip, a toe, an elbow, a single finger or two scissor-shaped fingers.

The effect processing apparatus provided by the embodiment of the present disclosure can execute the effect processing method provided by any embodiment of the present disclosure, and has the corresponding functional modules for executing the method and beneficial effects.

It should be noted that, the units and modules included in the above apparatus are only divided according to the functional logic, but are not limited to the above division as long as the corresponding function can be achieved. In addition, the specific names of the functional units are only for the purpose of mutual distinction and are not used to limit the scope of protection of the embodiments of the present disclosure.

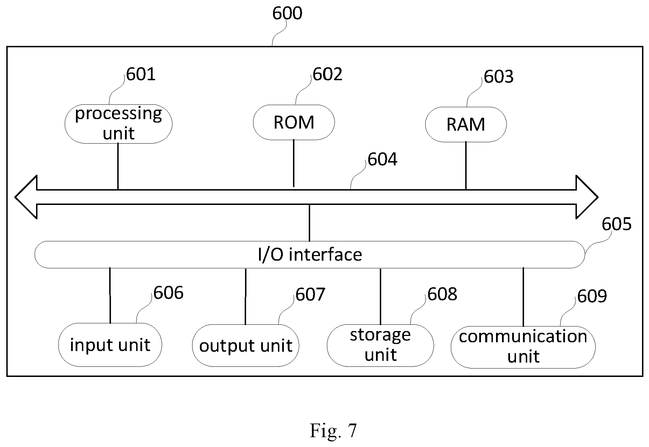

Fig. 7 is a structure diagram of an electronic device provided by an embodiment of the present disclosure. Refer to Fig. 7, which illustrates a schematic structural diagram of an electronic device (such as a terminal device or a server in Fig. 7) 600 suitable for implementing the embodiments of the present disclosure. The terminal device in the embodiments of the present disclosure may include but not be limited to a mobile terminal such as a mobile phone, a notebook computer, a digital broadcast receiver, a personal digital assistant (PDA), a tablet computer (PAD), a portable multimedia player (PMP), a vehicle-mounted terminal (such as vehicle-mounted navigation terminal), and a fixed terminal such as digital a TV, a desktop computer, etc. The electronic device shown in Fig. 7 is only an example, and should not bring any limitation to the functions and scope of use of the embodiments of the present disclosure.

As shown in Fig. 7, the electronic device 600 may include a processing apparatus (e.g., a central processing unit, a graphics processing unit, etc.) 601 that may perform various appropriate actions and processes according to a program stored in a read-only memory (ROM) 602 or a program loaded from a storage apparatus 608 into a random-access memory (RAM) 603. In the RAM 603, various programs and data necessary for the operation of the electronic device 600 are also stored. The processing apparatus 601, the ROM 602, and the RAM 603 are connected to each other through a bus 604. An input/output (I/O) interface 605 is also connected to the bus 604.

Generally, the following apparatuses may be connected to the I/O interface 605: an input apparatus 606 including, for example, a touchscreen, a touchpad, a keyboard, a mouse, a camera, a microphone, an accelerometer, a gyroscope, etc.; an output apparatus 607 including, for example, a liquid crystal display (LCD), a speaker, a vibrator, etc.; the storage apparatus 608 including, for example, a magnetic tape, a hard disk, etc.; and a communication apparatus 609. The communication apparatus 609 may allow the electronic device 600 to perform wireless or wired communication with other devices to exchange data. Although Fig. 7 shows the electronic device 600 having various apparatuses, it should be understood that it is not required to implement or have all of the illustrated apparatuses. More or fewer apparatuses may be implemented or provided alternatively.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, and the computer program includes program codes for executing the method shown in the flowchart. In such an embodiment, the computer program may be downloaded and installed from a network through the communication apparatus 609, or installed from the storage apparatus 608, or installed from the ROM 602. When the computer program is executed by the processing apparatus 601, the above functions defined in the method of the embodiments of the present disclosure are executed.

The names of messages or information exchanged between multiple apparatuses in implementations of the present disclosure are used for illustrative purposes only but are not used to limit the scope of these messages or information.

The electronic device provided in the embodiment of the present disclosure belongs to the same inventive concept as the effect processing method provided in the above embodiments. Technical details not described in detail in the embodiment can be found in the above embodiments, and the embodiment has the same beneficial effects as the above embodiments.

The embodiment of the present disclosure provides a computer storage medium on which a computer program is stored. When the program is executed by a processor, it implements the effect processing method provided in the above embodiments.

It should be noted that the above computer-readable medium in the present disclosure may be a computer-readable signal medium, or a computer-readable storage medium, or any combination of the above two. The computer-readable storage medium may be, for example, but not limited to, an electronic, magnetic, optical, electromagnetic, infrared, or semiconductor system, apparatus, or device, or any combination of the above. More specific examples of the computer-readable storage medium may include, but are not limited to: an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated in a baseband or as part of a carrier wave, and computer-readable program codes are carried therein. This propagated data signal may take many forms, including but not limited to an electromagnetic signal, an optical signal, or any suitable combination of the above. The computer-readable signal medium may also be any computer-readable medium other than the computer-readable storage medium. The computer-readable signal medium may send, propagate, or transmit a program for use by or in combination with an instruction execution system, apparatus, or device. The program codes contained on the computer-readable medium may be transmitted by any suitable medium, including but not limited to: a wire, an optical cable, RF (radio frequency), etc., or any suitable combination of the above.

In some implementations, the electronic device may communicate using any currently known or future-developed network protocol, such as HTTP (HyperText Transfer Protocol), and may be interconnected with digital data communication (for example, communication network) in any form or medium. Examples of communication networks include local area networks ("LAN"), wide area networks ("WAN"), international network (for example, the Internet), and end-to-end networks (for example, ad hoc end-to-end networks), as well as any currently known or future-developed networks.

The above computer-readable medium may be included in the above electronic device; or may exist alone without being assembled into the electronic device.

The above computer-readable medium carries one or more programs that, when executed by the electronic device, cause the electronic device to: display an effect drawing canvas in response to an effect trigger operation; receive a drawing operation of a trigger object acting on the effect drawing canvas, display a drawn outline image corresponding to the drawing operation, and fill first content in the drawn outline image for display; and when a preset display condition is met, fill second content in the drawn outline image to obtain a rendering and display the rendering.

Computer program codes for performing the operations of the present disclosure may be written in one or more programming languages or a combination thereof. The above programming languages include, but are not limited to, object-oriented programming languages such as Java, Smalltalk, C++, and also include conventional procedural programming languages such as "C" language or similar programming languages. The program codes may be executed entirely on a user's computer, partly on a user's computer, as a stand-alone software package, partly on a user's computer and partly on a remote computer, or entirely on a remote computer or a server. In the case of the remote computer, the remote computer may be connected to the user's computer through any kind of network, including a local area network (LAN) or a wide area network (WAN), or may be connected to an external computer (for example, connected through the Internet using an Internet service provider).

The flowcharts and block diagrams in the drawings illustrate possible architecture, function, and operation implementations of the system, method, and computer program product according to various embodiments of the present disclosure. In this regard, each block in the flowcharts or block diagrams may represent a module, a program segment, or a part of codes, and the module, the program segment, or the part of codes contains one or more executable instructions for implementing specified logical functions. It should also be noted that in some alternative implementations, the functions marked in the blocks may also occur in a different order than the order marked in the drawings. For example, two blocks shown in succession may actually be executed substantially in parallel, or may sometimes be executed in a reverse order, which depends on the functions involved. It should also be noted that each block in the block diagrams and/or flowcharts, and the combination of blocks in the block diagrams and/or flowcharts, may be implemented by a dedicated hardware-based system that performs specified functions or operations, or may be implemented by a combination of dedicated hardware and computer instructions.

The modules involved in the embodiments of the present disclosure may be implemented in software or hardware. The name of a module does not constitute a limitation on the module itself under certain circumstances. For example, the first acquisition unit may also be described as a unit that acquires at least two Internet Protocol addresses.

The functions described above in this document may be at least partially performed by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, the machine-readable medium may be a tangible medium that may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of machine-readable storage media may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, Example 1 provides an effect processing method, including:
displaying an effect drawing canvas in response to an effect trigger operation;
receiving a drawing operation of a trigger object acting on the effect drawing canvas, displaying a drawn outline image corresponding to the drawing operation, and filling first content in the drawn outline image for display; and
when a preset display condition is met, filling second content in the drawn outline image to obtain a rendering and displaying the rendering.

According to one or more embodiments of the present disclosure, Example 2 provides an effect processing method, including:
optionally, the second content includes texture information, and the rendering includes an effect texture image; the filling the second content in the drawn outline image to obtain the rendering and displaying the rendering includes:
generating a grid image based on the drawn outline image; and
inputting the grid image into a pre-trained generating model so that the generating model fills the texture information in the grid image to obtain the effect texture image corresponding to the drawn outline image, and displaying the effect texture image, where the generating model is obtained by training a pre-established diffusion model based on a sample texture image and a sample text corresponding to the sample texture image.

According to one or more embodiments of the present disclosure, Example 3 provides an effect processing method, including:
optionally, the generating the grid image based on the drawn outline image includes:
down-sampling the drawn outline image to obtain a scaling image of a preset size;
processing pixel points in the scaling image by setting a second preset number of pixel points to a preset color for each interval of a first preset number of pixel points; and
enlarging a processed scaling image to an original size of the drawn outline image to obtain the grid image.

According to one or more embodiments of the present disclosure, Example 4 provides an effect processing method, including:
optionally, the generating the grid image based on the drawn outline image includes:
enlarging the drawn outline image to a second size when a size of the drawn outline image is smaller than a first size, and generating the grid image based on the drawn outline image of the second size;
after obtaining the effect texture image corresponding to the drawn outline image and before displaying the effect texture image, the effect processing method further includes:
   adjusting the effect texture image to a same size as the drawn outline image.

According to one or more embodiments of the present disclosure, Example 5 provides an effect processing method, including:
optionally, the diffusion model is decomposed into a UNet network, a VAE coding network, a VAE decoding network and a Clip text coding network for deployment.

According to one or more embodiments of the present disclosure, Example 6 provides an effect processing method, including:
optionally, model optimization parameters of the diffusion model at least include a parameter for controlling an effect of the generated effect texture image, a parameter for controlling a correlation of the effect texture image with an input grid image and a level of refinement of the generated effect texture image, and a parameter for controlling a count of rounds of the generated effect texture image.

According to one or more embodiments of the present disclosure, Example 7 provides an effect processing method, including:
optionally, the displaying the rendering includes:
retrieving a reference outline image matching the drawn outline image from a pre-established search library, using a rendering corresponding to the reference outline image as a rendering corresponding to the drawn outline image, and displaying the rendering.

According to one or more embodiments of the present disclosure, Example 8 provides an effect processing method, including:
optionally, the displaying the rendering includes:
acquiring a rendering corresponding to the drawn outline image, performing post-processing on the rendering, and displaying a post-processed rendering, where the post-processing includes at least one selected from a group of binarization processing, matting processing and background removal processing.

According to one or more embodiments of the present disclosure, Example 9 provides an effect processing method, including:
optionally, the filling the second content in the drawn outline image to obtain the rendering includes:
filling a first object of a preset type and/or a second object associated with the first object in the drawn outline image to obtain the rendering.

According to one or more embodiments of the present disclosure, Example 10 provides an effect processing method, including:
optionally, the trigger object includes at least one selected from a group of a nasal tip, a toe, an elbow, a single finger or two scissor-shaped fingers.

According to one or more embodiments of the present disclosure, Example 11 provides an effect processing apparatus, including:
a canvas display module configured to display an effect drawing canvas in response to an effect trigger operation;
an outline display module configured to receive a drawing operation of a trigger object acting on the effect drawing canvas, display a drawn outline image corresponding to the drawing operation, and fill first content in the drawn outline image for display; and
an effect display module configured to fill second content in the drawn outline image when a preset display condition is met to obtain a rendering and display the rendering.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, but also covers other technical solutions formed by any combination of the above technical features or their equivalent features without departing from the above disclosed concept, for example, a technical solution formed by replacing the above features with technical features with similar functions disclosed in the present disclosure (but not limited to).

In addition, although the operations are described in a particular order, this should not be understood as requiring that the operations be performed in the particular order shown or in a sequential order. Under certain circumstances, multitasking and parallel processing may be advantageous. Likewise, although several specific implementation details are included in the above discussion, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments, either individually or in any suitable sub-combination.

Although the present subject matter has been described in language specific to structural features and/or logical actions of the method, it should be understood that the subject matter defined in the appended claims is not necessarily limited to the specific features or actions described above. Rather, the specific features and actions described above are merely exemplary forms for implementing the claims.

## Claims

1. An effect processing method, comprising:
displaying an effect drawing canvas in response to an effect trigger operation;
receiving a drawing operation of a trigger object acting on the effect drawing canvas, displaying a drawn outline image corresponding to the drawing operation, and filling first content in the drawn outline image for display; and
when a preset display condition is met, filling second content in the drawn outline image to obtain a rendering and displaying the rendering.

2. The effect processing method according to claim **1,** wherein the second content comprises texture information, and the rendering comprises an effect texture image;
the filling the second content in the drawn outline image to obtain the rendering and displaying the rendering comprises:
generating a grid image based on the drawn outline image; and
inputting the grid image into a pre-trained generating model so that the generating model fills the texture information in the grid image to obtain the effect texture image corresponding to the drawn outline image, and displaying the effect texture image, wherein the generating model is obtained by training a pre-established diffusion model based on a sample texture image and a sample text corresponding to the sample texture image.

3. The effect processing method according to claim 2, wherein the generating the grid image based on the drawn outline image comprises:
down-sampling the drawn outline image to obtain a scaling image of a preset size;
processing pixel points in the scaling image by setting a second preset number of pixel points to a preset color for each interval of a first preset number of pixel points; and
enlarging a processed scaling image to an original size of the drawn outline image to obtain the grid image.

4. The effect processing method according to claim 2, wherein the generating the grid image based on the drawn outline image comprises:
enlarging the drawn outline image to a second size when a size of the drawn outline image is smaller than a first size, and generating the grid image based on the drawn outline image of the second size;
after obtaining the effect texture image corresponding to the drawn outline image and before displaying the effect texture image, the effect processing method further comprises:
adjusting the effect texture image to a same size as the drawn outline image.

5. The effect processing method according to any of claims 2-4, wherein the diffusion model is decomposed into a UNet network, a VAE coding network, a VAE decoding network and a Clip text coding network for deployment.

6. The effect processing method according to any of claims 2-5, wherein model optimization parameters of the diffusion model at least comprise a parameter for controlling an effect of the generated effect texture image, a parameter for controlling a correlation of the effect texture image with an input grid image and a level of refinement of the generated effect texture image, and a parameter for controlling a count of rounds of the generated effect texture image.

7. The effect processing method according to any of claims 1-6, wherein the displaying the rendering comprises:
retrieving a reference outline image matching the drawn outline image from a pre-established search library, using a rendering corresponding to the reference outline image as a rendering corresponding to the drawn outline image, and displaying the rendering.

8. The effect processing method according to any of claims 1-6, wherein the displaying the rendering comprises:
acquiring a rendering corresponding to the drawn outline image, performing post-processing on the rendering, and displaying a post-processed rendering, wherein the post-processing comprises at least one selected from a group of binarization processing, matting processing and background removal processing.

9. The effect processing method according to any of claims 1-8, wherein the filling the second content in the drawn outline image to obtain the rendering comprises:
filling a first object of a preset type and/or a second object associated with the first object in the drawn outline image to obtain the rendering.

10. The effect processing method according to any of claims 1-9, wherein the trigger object comprises at least one selected from a group of a nasal tip, a toe, an elbow, a single finger or two scissor-shaped fingers.

11. An effect processing apparatus, comprising:
a canvas display module configured to display an effect drawing canvas in response to an effect trigger operation;
an outline display module configured to receive a drawing operation of a trigger object acting on the effect drawing canvas, display a drawn outline image corresponding to the drawing operation, and fill first content in the drawn outline image for display; and
an effect display module configured to fill second content in the drawn outline image when a preset display condition is met to obtain a rendering and display the rendering.

12. The effect processing apparatus according to claim 11, wherein the second content comprises texture information, and the rendering comprises an effect texture image;
the effect display module comprises a grid image generating unit and an effect texture image display unit; wherein
the grid image generating unit is configured to generate a grid image based on the drawn outline image;
and
the effect texture image display unit is configured to input the grid image into a pre-trained generating model so that the generating model fills the texture information in the grid image to obtain the effect texture image corresponding to the drawn outline image, and display the effect texture image, wherein the generating model is obtained by training a pre-established diffusion model based on a sample texture image and a sample text corresponding to the sample texture image.

13. The effect processing apparatus according to claim 12, wherein the grid image generating unit is further configured to:
down-sample the drawn outline image to obtain a scaling image of a preset size;
process pixel points in the scaling image by setting a second preset number of pixel points to a preset color for each interval of a first preset number of pixel points; and
enlarge a processed scaling image to an original size of the drawn outline image to obtain the grid image.

14. The effect processing apparatus according to claim 12, wherein the grid image generating unit is further configured to:
enlarge the drawn outline image to a second size when a size of the drawn outline image is smaller than a first size, and generate the grid image based on the drawn outline image of the second size;
the effect processing apparatus further comprises:
an effect texture image adjusting module configured to adjust the effect texture image to a same size as the drawn outline image.

15. The effect processing apparatus according to any of claims 12-14, wherein the diffusion model is decomposed into a UNet network, a VAE coding network, a VAE decoding network and a Clip text coding network for deployment; and
model optimization parameters of the diffusion model at least comprise a parameter for controlling an effect of the generated effect texture image, a parameter for controlling a correlation of the effect texture image with an input grid image and a level of refinement of the generated effect texture image, and a parameter for controlling a count of rounds of the generated effect texture image.

16. The effect processing apparatus according to any of claims 11-15, wherein the effect display module is further configured to:
retrieve a reference outline image matching the drawn outline image from a pre-established search library, use a rendering corresponding to the reference outline image as a rendering corresponding to the drawn outline image, and display the rendering.

17. The effect processing apparatus according to any of claims 11-15, wherein the effect display module is further configured to:
acquire a rendering corresponding to the drawn outline image, perform post-processing on the rendering, and display a post-processed rendering, wherein the post-processing comprises at least one selected from a group of binarization processing, matting processing and background removal processing.

18. The effect processing apparatus according to any of claims 11-17, wherein the effect display module is further configured to:
fill a first object of a preset type and/or a second object associated with the first object in the drawn outline image to obtain the rendering.

19. An electronic device, comprising:
one or more processors; and
a storage apparatus, being configured to store one or more programs,
wherein when the one or more programs are executed by the one or more processors, the one or more processors implement the effect processing method according to any of claims 1-10.

20. A storage medium comprising a computer executable instruction, wherein the computer executable instruction is used to implement the effect processing method according to any of claims 1-10 when being executed by a computer processor.
